# DEMANDE DE BREVET EUROPEEN

(11) **EP 0 765 032 A1**
(43) Date de publication de la demande: **26.03.1997**
(21) Numéro de dépôt: 96202531.8
(22) Date de dépôt: 11.09.1996
(51) Int. Cl.: H03J 1/00, H04L 9/00

(54) **Dispositif de télécommande d'un appareil récepteur vidéo**

(30) Priorité: 20.09.1995 FR 9511037
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Gaudichon, Patrice, 75008 Paris (FR)
(74) Mandataire: Caron, Jean

(57) **Abrégé**

Un boîtier de télécommande de appareil récepteur vidéo étant muni entre autres de touches numériques destinées à la transmission de chiffres de 0 à 9 (23), et l'appareil récepteur vidéo étant muni d'un lecteur de carte bancaire afin de permettre des paiements, le boîtier de télécommande est muni de moyens de chiffrement ayant pour effet de transmettre, lors de l'actionnement d'une touche de 0 à 9, un code représentant une valeur numérique J différente de celle I correspondant à la touche actionnée, et telle que, pour tout I compris entre 0 et 9, J est aussi compris entre 0 et 9.

Applications : télé-achat avec paiement par carte bancaire.

## Description

La présente invention concerne un dispositif de télécommande d'un appareil récepteur vidéo, comprenant un boîtier de télécommande muni de touches destinées à la transmission de messages correspondant à l'actionnement de touches, et un appareil récepteur vidéo muni de moyens de réception des dits messages, le boîtier de télécommande étant muni de moyens de chiffrement ayant pour effet de transmettre des messages chiffrés, et l'appareil récepteur vidéo étant muni de moyens réciproques pour déchiffrer les messages.

Un dispositif de télécommande d'un téléviseur correspondant au préambule ci-dessus est connu du document EP-A-0 417 735. Le dispositif décrit par ce document a pour but d'éviter le vol des boîtiers de télécommande dans les chambres d'hôtel. A cet effet toutes les commandes de ces boîtiers sont chiffrées, de telle façon que la télécommande ne peut pas fonctionner, lorsqu'elle est utilisée avec un autre téléviseur que celui de l'hôtel.

Un objet de l'invention est de fournir un système de télécommande qui, lorsque l'on désire réaliser des échanges de messagerie ou des transactions à caractère économique, au moyen d'un appareil récepteur vidéo domestique associé à une carte intelligente, par exemple une carte bancaire dite "à puce", assure la confidentialité de la transmission vers l'appareil récepteur vidéo d'un code personnel secret, au moyen de la télécommande, cette dernière restant compatible par ailleurs avec un téléviseur standard.

A cet effet, le boîtier de télécommande étant muni entre autres de touches dites numériques repérées chacune par un caractère représentant une valeur numérique et destinées à la transmission d'un message représentant cette valeur numérique, les moyens de chiffrement n'agissent que pour les touches numériques, et ont pour effet de transmettre un message représentant une valeur numérique différente de celle correspondant à la touche, avec une bijection entre l'ensemble des dites valeurs numériques différentes et l'ensemble des valeurs correspondant à chaque touche.

L'invention est donc basée sur l'idée de faire correspondre à la série des nombres susceptibles d'être utilisés dans un code secret, une autre série comprenant, en référence avec chacun de ces nombres, un nombre différent.

De préférence, une valeur numérique de l'ensemble des dites valeurs numériques différentes étant désignée par I et une valeur numérique de l'ensemble des valeurs correspondant à chaque touche étant désignée par J, la dite bijection présente la caractéristique que, pour tout I compris entre 0 et 9, J est aussi compris entre 0 et 9.

Les moyens de chiffrement comprennent avantageusement un tableau à dix positions, dans laquelle, en une position qui correspond à une première valeur numérique, est enregistrée une seconde valeur numérique qui doit être transmise à la place de la première, chacun des chiffres de 0 à 9 ne se trouvant qu'une fois dans le tableau.

Ainsi, pour les chiffres habituellement utilisés dans le code d'une carte bancaire, à savoir 0-9, on obtient très simplement un nombre de combinaisons de chiffrement égal à 9!, soit 362880.

Le boîtier de télécommande est avantageusement muni de moyens, à la disposition de l'usager, pour mettre en service ou hors service les moyens de chiffrement. Ces moyens sont actionnés par exemple par appui simultané sur deux touches prédéterminées, ou par une touche spécifique. En outre il comporte avantageusement des moyens pour désactiver automatiquement le chiffrement dès qu'une touche autre qu'une touche du pavé numérique est actionnée.

Ainsi l'usage d'un chiffrement peut être limité aux opérations à caractère économique.

Un appareil récepteur vidéo est avantageusement muni d'un dispositif de télécommande selon l'invention.

Ces aspects de l'invention ainsi que d'autres aspects plus détaillés apparaîtront plus clairement grâce à la description suivante d'un mode de réalisation constituant un exemple non limitatif.

La figure 1 représente schématiquement un dispositif comprenant un boîtier de télécommande et un téléviseur muni d'un lecteur de carte à puce.

La figure 2 représente un boîtier de télécommande et un schéma d'un circuit contenu dans ce boîtier.

La figure 3 illustre la structure d'un message émis par le boîtier de télécommande.

L'invention sera décrite en référence à un téléviseur, à titre d'exemple, mais il est clair qu'elle s'applique aussi bien à tout autre type de récepteur vidéo muni d'une télécommande.

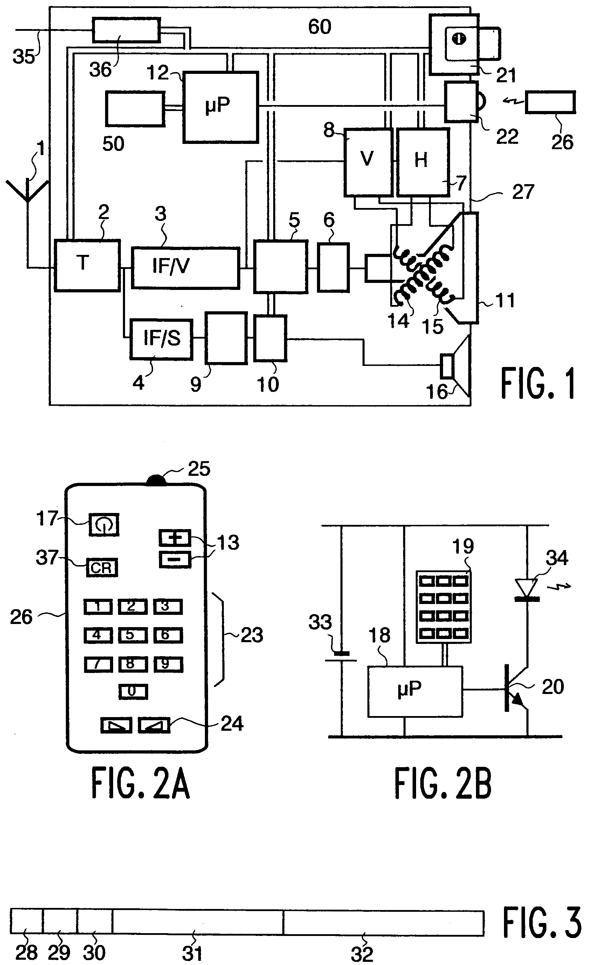

Le dispositif de la figure 1 comprend un téléviseur, de type connu pour l'essentiel, muni :
- d'un syntoniseur 2 recevant un signal par exemple d'une antenne 1 et transposant sa fréquence vers des fréquences intermédiaires destinées à un amplificateur à fréquence intermédiaire vidéo 3 et à un amplificateur à fréquence intermédiaire son 4 qui lui font suite,
- d'un démodulateur 9, suivant l'amplificateur à fréquence intermédiaire son 4, qui délivre les signaux audio en bande de base à un amplificateur de puissance audio 10, alimentant un haut-parleur 16,
- d'un élément 5, suivant l'amplificateur à fréquence intermédiaire vidéo 3, et qui comporte un démodulateur produisant un signal vidéo en bande de base pour un amplificateur vidéo 6 délivrant les signaux ad-hoc aux électrodes d'un tube image 11 à rayons cathodiques. L'élément 5 comprend aussi un séparateur qui extrait du signal issu du démodulateur des signaux de synchronisation qui sont amenés à un étage de balayage ligne 7 et à un étage de balayage vertical ou "trame" 8, lesquels délivrent des courants dans des bobinages déviateurs 14 et 15 de ligne et de trame,
- d'un processeur 12, habituellement un microprocesseur, pour gérer l'ensemble des fonctions. Une mémoire 50 est prévue pour mémoriser des données, dont, entre autres, les valeurs courantes des différents réglages du téléviseur. Le microprocesseur est bien entendu relié par un bus 60 à tous les éléments de l'appareil qui peuvent être commandés : le syntoniseur 2 (choix des canaux), les circuits vidéo et son 5 et 10 (différents réglages de niveau), les circuits de balayage 7 et 8 (choix de différents formats d'image),
- d'un récepteur de commandes 22 pour recevoir, en série, des signaux de lumière infra-rouge de la part d'un boîtier de télécommande 26, et les transmettre au microprocesseur 12.

Le système comporte en outre un lecteur de carte à puce 21 et un circuit 36 d'interface avec une ligne téléphonique 35, à l'aide desquels des échanges divers, par exemple des transactions commerciales, peuvent être réalisées, avec paiement au moyen d'une carte bancaire insérée dans le lecteur 21. Le code personnel (code secret) de l'usager peut être communiqué au système au moyen de la télécommande 26.

Le boîtier de télécommande de la figure 2A comporte de façon connue une touche de mise en veille 17, une paire de touches 24 permettant d'augmenter ou de diminuer la valeur d'un paramètre, par exemple la puissance du son, un pavé numérique 23 permettant notamment le choix d'un canal, des touches 13 permettant par exemple d'augmenter ou de diminuer le numéro du canal reçu. C'est au moyen des touches du pavé numérique 23 qu'un code personnel peut être communiqué au système.

La figure 2B illustre un exemple d'un circuit utilisable pour un tel boîtier de télécommande. Une pile 33 alimente un microprocesseur spécialisé 18 et une diode émettrice électroluminescente 34, commandée par un transistor 20. Un circuit dénommé PCA 84 C 122, vendu par la Demanderesse, est un microprocesseur spécialisé prévu pour un tel usage ; il contient un processeur de type 84 C XXX, ainsi que les mémoires ROM et RAM nécessaires, et comprend un modulateur câblé qui délivre des impulsions (destinées à la diode 34) dont la durée et le nombre sont programmables, et il possède une sortie pour la commande du transistor 20.

Pour la mise en service ou hors service des moyens de chiffrement, on peut prévoir que l'usager appuie simultanément sur deux touches prédéterminées, par exemple les touches "+" et "0". On peut aussi prévoir une touche spécifique 37 pour cette fonction.

L'actionnement simultané de deux touches prédéterminées, ou l'actionnement de la touche spécifique 37, lève ou baisse alternativement un drapeau dans une mémoire du microprocesseur 18, pour indiquer si les valeurs numériques doivent être chiffrées. A cette occasion, le microprocesseur 18 déclenche l'émission, par la diode 34, d'un message qui indique Si, dorénavant, les valeurs numériques seront chiffrées, afin que le récepteur 27 soit en accord avec l'émetteur. Le chiffrement est désactivé automatiquement dès qu'une touche autre qu'une touche du pavé numérique est actionnée. Il peut éventuellement être désactivé automatiquement après que quatre appuis successifs ont été réalisés sur des touches du pavé numérique.

Un message de commande comporte, comme par exemple dans le système connu sous l'appellation "RC5", plusieurs champs successifs (figure 3) :
- un premier champ 28 contient un bit de départ "un",
- un deuxième champ 29 contient un bit qui dénote (en relation avec le cinquième champ) les commandes 0 à 63 s'il est à un, et les commandes 64 à 127 s'il est à zéro,
- un troisième champ 30 contient un bit de contrôle ("toggle bit") qui bascule après chaque commande,
- un quatrième champ contient cinq bits pour décrire quel est le système que la commande prétend atteindre (magnétoscope, téléviseur, lecteur de disque compact, etc),
- un cinquième et dernier champ de six bits contient le message proprement dit, ayant une valeur comprise entre 0 et 63, à laquelle le récepteur ajoute 64 si le bit du deuxième champ est à zéro.

Il se trouve que dans le système RC5, les valeurs numériques de 0 à 9 sont indiquées tout simplement par une valeur du cinquième champ allant de 0 à 9.

Dans l'art antérieur, il a été proposé de chiffrer une valeur numérique en partant d'une valeur exprimée par un nombre binaire de longueur donnée, et en lui faisant subir une opération logique "ou exclusif" avec une clé de même longueur. Néanmoins la méthode préférée est la suivante : un tableau de dix positions est prévu en mémoire, dans lequel est enregistrée, dans chaque position correspondant à une première valeur numérique, une seconde valeur numérique qui doit être transmise à la place de la première. Par exemple, à la position correspondant à 4, on lit 7, à la position correspondant à 5, on lit 2, etc. Bien entendu, chacun des chiffres de 0 à 9 ne se trouve qu'une fois dans la mémoire. A chaque appui sur une touche numérique, le tableau est consulté et le chiffre qui y est lu est transmis à la place du numéro de la touche. Les moyens de chiffrement sont donc constitués par ce tableau, et par une partie du logiciel du microprocesseur qui y fait appel. Ce logiciel ne traite que la partie 32 du message, représentant la valeur numérique, et seulement si une des touches 23 est actionnée, et si le susdit drapeau indique qu'un chiffrement est demandé. Bien entendu, la table de vérité en question doit être différente d'un dispositif à l'autre, de façon à assurer la confidentialité requise.

## Revendications

1. Dispositif de télécommande d'un appareil récepteur vidéo, comprenant un boîtier de télécommande muni de touches destinées à la transmission de messages correspondant à l'actionnement de touches, et un appareil récepteur vidéo muni de moyens de réception des dits messages, le boîtier de télécommande étant muni de moyens de chiffrement ayant pour effet de transmettre des messages chiffrés, et l'appareil récepteur vidéo étant muni de moyens réciproques pour déchiffrer les messages, **caractérisé en ce que**, le boîtier de télécommande étant muni entre autres de touches dites numériques repérées chacune par un caractère représentant une valeur numérique et destinées à la transmission d'un message représentant cette valeur numérique, les moyens de chiffrement n'agissent que pour les touches numériques, et ont pour effet de transmettre un message représentant une valeur numérique différente de celle correspondant à la touche, avec une bijection entre l'ensemble des dites valeurs numériques différentes et l'ensemble des valeurs correspondant à chaque touche.

2. Dispositif de télécommande d'un appareil récepteur vidéo, selon la revendication 1, **caractérisé en ce que**, une valeur numérique de l'ensemble des dites valeurs numériques différentes étant désignée par I et une valeur numérique de l'ensemble des valeurs correspondant à chaque touche étant désignée par J, la dite bijection présente la caractéristique que, pour tout I compris entre 0 et 9, J est aussi compris entre 0 et 9.

3. Dispositif de télécommande d'un appareil récepteur vidéo, selon la revendication 2, **caractérisé en ce que** les moyens de chiffrement comprennent un tableau à dix positions, dans laquelle, en une position qui correspond à une première valeur numérique, est enregistrée une seconde valeur numérique qui doit être transmise à la place de la première, chacun des chiffres de 0 à 9 ne se trouvant qu'une fois dans le tableau.

4. Dispositif de télécommande d'un appareil récepteur vidéo, selon la revendication 1, **caractérisé en ce que** le boîtier de télécommande est muni de moyens, à la disposition de l'usager, pour mettre en service ou hors service les moyens de chiffrement.

5. Dispositif de télécommande d'un appareil récepteur vidéo, selon la revendication 4, **caractérisé en ce que** les moyens, à la disposition de l'usager, pour mettre en service ou hors service les moyens de chiffrement, sont actionnés par l'appui simultané sur deux touches prédéterminées.

6. Dispositif de télécommande d'un appareil récepteur vidéo, selon la revendication 4, **caractérisé en ce que** les moyens, à la disposition de l'usager, pour mettre en service ou hors service les moyens de chiffrement, sont actionnés par l'appui sur une touche spécifiquement prévue à cet effet.

7. Dispositif de télécommande d'un appareil récepteur vidéo, selon la revendication 4, **caractérisé en ce qu**'il comporte des moyens pour désactiver automatiquement le chiffrement dès qu'une touche autre qu'une touche du pavé numérique est actionnée.

8. Appareil récepteur vidéo, **caractérisé en ce qu**'il est muni d'un dispositif de télécommande selon l'une quelconque des revendications 1 à 8.
